# EUROPEAN PATENT APPLICATION

(11) **EP 2 334 013 A1**
(43) Date of publication of application: **15.06.2011**
(21) Application number: 09252781.1
(22) Date of filing: 14.12.2009
(51) Int. Cl.: H04L 12/28, H04W 84/18, H04B 3/54

(54) **Intra-building communications**

(71) Applicant: Wireless Automation Solutions Limited, Norwich Norfolk NR3 1UB (GB)
(72) Inventor: Smart, Jonathan, Worle, Weston-super-Mare BS22 7XB (GB)
(74) Representative: Leppard, Andrew John

(57) **Abstract**

An intra-building communications network, a central controller, a network node and methods are disclosed. The intra-building communications network comprises: a plurality of network nodes, each network node being operable to establish a plurality of communications links with at least another network node, each communications link utilising a corresponding one of a plurality of different communications media; and a central controller operable to allocate each network node to a plurality of different networks, each network having a set of network nodes having communications links with other network nodes in the set which utilise the same communications media.
By providing different communications links over different media, each node is provided with more than one path over which messages may be sent to other network nodes. Hence, should one of the communications media fail or be suffering from a high degree of attenuation, then another communications media may be used to establish the communications link. This provides for increased redundancy within the network. Also, a central controller is provided which groups nodes which are interconnected by communications links using the same media into separate networks to provide for centralised co-ordination between the network nodes to further improve the co-ordination and management of network nodes within the networks. This allows for nodes on one network to communicate with nodes on other networks.
Preferably, communications media are powerline or wireless.

## Description

### FIELD OF THE INVENTION

The present invention relates to intra-building communications. In particular, embodiments relate to an intra-building communications network, a central controller, a network node and methods.

### BACKGROUND

Techniques for intra-building communications are known. Such networks enable messages to be transmitted between devices to provide for data transfer between those devices and/or to provide for home automation. For example, it is known to provide a system which enables a switch to be actuated in one part of a building to cause a device elsewhere in the building to be activated.

Whilst various implementations currently exist which provide such functionality, each has significant shortfalls.

Accordingly, it is desired to provide an improved technique for intra-building communications.

### SUMMARY OF THE INVENTION

According to a first aspect, there is provided an intra-building communications network, comprising: a plurality of network nodes, each network node being operable to establish a plurality of communications links with at least another network node, each communications link utilising a corresponding one of a plurality of different communications media; and a central controller operable to allocate each network node to a plurality of different networks, each network having a set of network nodes having communications links with other network nodes in the set which utilise the same communications media.

The first aspect recognises that a problem with existing networks is that they often lack reliability and robustness to cope with the varied environment in which they are installed, typically as a retrofit solution. For example, in a retrofit wired system, a failure in communications between devices can occur for a variety of reasons. Such reasons may include transient or constant noise on the mains supply due to other devices either connected to or near the main supply using motors or compressors such as washing machines, fridges, or devices that use large amounts of current. Also feedback can occur through household meters. Likewise, transformers, converters and filters can attenuate the signal almost completely, whilst devices operating on different phases or unconnected supplies are unable to propagate signals between them. Also, every device needs to be connected to a mains supply which reduces the utility of the system since this does not allow for the use of portable devices which may instead be powered by a battery. Similarly, retrofit wireless systems also suffer from reliability problems, particularly due to the typically limited transmission range between devices, which are generally low powered to maximise battery life. These devices can also suffer from transient or constant interference which blocks transmissions and can render portions of the wireless network unconnected to the remainder of the network and thus largely redundant. For example, attenuation can occur due to the presence of thick walls or metallic objects between devices, reduced power output from devices, or as a result of radio frequency interference generated by other devices within the home. Also, in such networks which may use mesh arrangements, it is typically difficult to understand the precise typology of the deployed network and thus understanding and remedying where and when particular failures in the arrangements occur can be difficult.

Accordingly, a plurality of network nodes is provided. Each of the network nodes may establish more than one different communications link with other network nodes. Each one of the different communications links may be established using a different communications media. In this way, each network node has different communications links over different media with other network nodes. By providing different communications links over different media, each node is provided with more than one path over which messages may be sent to other network nodes. Hence, should one of the communications media fail or be suffering from a high degree of attenuation, then another communications media may be used to establish the communications link. This provides for increased redundancy within the network. Also, a central controller is provided which groups nodes which are interconnected by communications links using the same media into separate networks to provide for centralised co-ordination between the network nodes to further improve the co-ordination and management of network nodes within the networks. This allows for nodes on one network to communicate with nodes on other networks.

In one embodiment, the central controller is operable to allocate each different network a unique network identifier and one network node within each set is operable as a controller to allocate each network node a unique node identifier within that network. Accordingly, each different network may be uniquely identified and the central controller may instruct one network node within that network to act as a network controller. The network node instructed to be the network controller may be the central controller itself. Typically, the network nodes selected to be the network controller may be the first network node identified by the central controller as being able to establish a network with other network nodes using a particular communications media. For example, the central controller may allocate the first network node identified as providing a communications link using a particular wireless communications format to act as the network controller for all other network nodes which can attach to the network created by that network controller. It will be appreciated that the central controller may allocate a further network node identified as providing a communications link using the same particular wireless communications format to act as the network controller for those network nodes which can not attach to the network created by the first network controller. The network controller may then allocate each attached network node a unique identifier within that network. It will be appreciated that the combination of the unique network identifier together with the unique node identifier will provide a unique address for that network node when utilising that communications media within the complete network.

In one embodiment, the communications media may comprise one or more different wired communications media and/or one or more different wireless communications media.

In one embodiment, the unique node identifier is indicative of a node's hierarchical position in that network. Accordingly, for hierarchal-type networks, the unique node identifier may indicate the position of that network node within the network. It will be appreciated that the identity of parent and child nodes may then be derivable from that unique node identifier. In one embodiment, each network node is operable to communicate received and/or generated messages intended for the central controller preferentially with its parent.

In one embodiment, each network node has a plurality of unique node identifiers, one for each of the plurality of different networks. Accordingly, each network node may have more than one unique identifier, each unique identifier corresponding to that node within each of the different networks it is attached to. For example, each network node may have a different unique identifier for each one or more different wired network types and/or a different unique identifier for each one or more different wireless network types. Hence, it can be seen that it is possible to address not only the physical network node but also the communications media type to be utilised when communicating with that network node. This approach enables the media of the communications link used to communicate with that network node to simply be specified within the address for that network node. Hence, the same network node can be communicated with by different communications media which enables messages to be transmitted over different media should some of the media fail.

In one embodiment, each network node is operable to communicate its unique node identifiers to the central controller and the central controller is operable to store the unique node identifiers for those networks in a central addressing table. Accordingly, each network node provides its identifiers to the central controller. It will be appreciated that the network and node identifier may be concatenated into a single unique identifier and provided to the central controller in that form. However, it will be appreciated that these identifiers may also instead be provided separately. These identifiers may then be stored in a central addressing table within the central controller.

In one embodiment, each network node may store an indication of its parent within the network and is operable to communicate in preference with its parent when providing information to the central controller. Likewise, each network node may store an indication of a preferred network node to communicate with in preference when communicating with the central controller. Hence, information can readily be transmitted from network node to network node back to the central controller via preferred network nodes, such network nodes typically providing the most direct path having the least number of hops back to the central controller.

In one embodiment, each network node is operable to store the node identifiers communicated to the central controller via that node in a node-addressing table.

In one embodiment, each network node is operable, upon detection of a plurality of different networks utilising the same communications media, to connect to one of the plurality of different networks and to communicate details of other of the plurality of different networks to the central controller. Accordingly, should a network node determine that it has been accepted on two or more different networks, each sharing the same communications media, then the network node will join one network and will inform the central controller of the networks which it declined to join. It will be appreciated that such a situation may occur when, for example, a network node is placed in a location which bridges separate networks. When this occurs, the network node will join just one of the networks and provide details of the other networks to the central controller.

In one embodiment, the central controller is operable upon receipt of the details to instruct the network nodes operable as the controller for the other of the plurality of different networks to cease as the controllers. Accordingly, the central node instructs the controllers for the rejected networks to cease to operate as a controller; this causes the rejected networks to cease to exist. In one embodiment, the network nodes of the now-ceased networks will attempt to join another network. Typically, the network nodes will typically connect through the network node which initially rejected the unique identifiers to its network. In this way, it can be seen that separate networks which become bridged by the network node can then reform as a single network.

In one embodiment, each network node is operable to store unique identifiers of other network nodes on any network having a one-hop connection in the node-addressing table. Accordingly, each network node may store in its addressing table the unique identifiers of those network nodes which are coupled by a single hop to that network node (i.e. those network nodes which can be communicated with directly by that network node). As mentioned above, one of these unique identifiers on each network may be identified as a preferential address to which generated messages or messages intended for the central controller should be transmitted. These unique identifiers indicating addresses may also be associated with an entity unique identifier which uniquely identifies the network node or entity itself.

In one embodiment, each network node is operable to communicate the unique identifiers of other network nodes on any network having a one hop connection to other network nodes and/or the central controller, each of which generate a routing table indicative of communications links between network nodes. In this way, information on the interconnections between network nodes can be generated. Hence, for any particular message received by a network node, a next hop network node to which that message should be passed can readily be identified.

In one embodiment, each network node is operable to determine a propagation delay for each communications link with other network nodes having a one-hop connection. Accordingly, in addition to the addresses of those network nodes with which network node may communicate with being stored, the network node may also determine the speed at which communications may be established with those other network nodes. Such a speed may include, for example, the propagation delay to that network node (which may include set-up and transmission and acknowledgement time and/or may include the bandwidth speed of the communications link). Hence, each network node will maintain details of the speed at which communications links may be established with other network nodes.

In one embodiment, each network node is operable to communicate its propagation delays for each communication link with other network nodes having a one hop connection to the central controller via network nodes and the central controller is operable to store the propagation delays in an central routing table. Accordingly, those propagation delays or communications link speeds may be transmitted back to the central controller which may utilise that information, together with the addressing information for storage in a central routing table. From the propagation delay information and the addressing table it is possible to maintain a routing table which indicates every possible route from the central controller to any network node, together with an indication of the likely speed of transmission along that route.

In one embodiment, each network node is operable to store the propagation delays communicated to the central controller via that node in a node routing table. Accordingly, each network node utilises the propagation delay information which it receives to augment its own routing table.

In one embodiment, each network node is operable upon initiation of an originating message to communicate that originating message to the central controller for routing to at least one destination network node. Accordingly, when a message is initiated by a network node, then that network node communicates that message back to the central controller. It will be appreciated that the network node may then utilise its addressing table and routing table to route the message back to the central controller via the most efficient path. It will be appreciated that in this arrangement the originating message is communicated back to the central controller because the network node which originated the message may not be programmed with the destination address of the node for which that message is intended and instead that functionality may only be stored in the central controller in order to provide for improved centralised control and centralised reconfiguration of the network.

In one embodiment, the central controller is operable on receipt of the originating message to determine from a messaging table at least one resultant message to be transmitted to the at least one destination network node. Accordingly, the central controller may utilise a messaging table which provides a correlation between the receipt of a particular message and the resultant message which needs to be transmitted. For example, an originating message may be generated by a network node such as a switch, this message may then be routed back to the central controller. The central controller may be programmed in its messaging table to generate one or more resultant messages to be transmitted to one or more destination nodes. Such a situation may occur when, for example, the actuation of a switch is intended to control various predetermined lights throughout the property or to control various other appliances. Hence, on receipt of the message from the switch, the messaging table indicates that various messages are to be sent to each of the various lights or other appliances. By maintaining the message table in the central node, it is possible to add or remove functions to the network without having to change settings in various nodes throughout the network. For example, lights or appliances controlled on actuation of the switch may be added to removed without needing to change the configuration of the deployed switch or the distributed lights or appliances themselves.

In one embodiment, the central controller is operable to determine from the central addressing table and the central routing table a routing path having a least number of hops from the central controller to the at least one destination network node. Accordingly, the central controller may determine from its routing table the route to the destination node which is the most direct.

In one embodiment, the central controller is operable to transmit the resultant message to a network node indicated by the routing path as being a first hop along the routing path. Accordingly, the central controller may determine the first part of the route which needs to be taken to transmit the message to the destination node.

In one embodiment, the central controller is operable to transmit the resultant message to the network node indicated by the routing path as being the first hop along the routing path utilising that communication link between the central controller and network node indicated by the routing table to have the least propagation delay. Hence, when more than one communications links may be utilised, the one having the least delay is selected preferentially.

In one embodiment, the network node is operable to determine from the node addressing table and the node routing table a re-evaluated routing path from the network node to the at least one destination network node having a least propagation delay. Accordingly, each network node along the routing path may also re-evaluate the most efficient route for passing the message to the destination node. In this way, it can be seen that any transient delays caused in the propagation of those messages can be accounted for and, if a revised path is required, then this can be selected. Hence, should a network node fail for whatever reason or should interference disrupt the communications path once the message has been sent by the central controller, then the network can adapt to these disruptions and re-route the message to the destination node using a more appropriate path.

In one embodiment, the network node is operable to transmit the resultant message to a network node indicated by the re-evaluated routing path as being a next hop along the re-evaluated routing path. Accordingly, the network node may then transmit the resultant message to the node determined to be the next hop along the adjusted routing path.

In one embodiment, each network node is operable, in the event that the resultant message fails to be transmitted to the network node indicated as being the next hop, to update its routing table to indicate a loss of that communications link, to determine from the updated routing table an updated re-evaluated path from the network node to the destination network node having a least propagation delay and to transmit the resultant message to a network node indicated by the updated re-evaluated path as being a next hop. Accordingly, when a disruption occurs which results in the message not being transmitted to the intended network node, then the network node may update its routing table to indicate an increased propagation delay to the intended node or may even remove the network node from its addressing and routing table. The network node may then re-evaluate a routing path to the destination node based on the revised addressing and routing table. The network node may then transmit the message onto the network node indicated as being the next hop based on the re-evaluated path.

In one embodiment, the revised routing table and/or addressing table is communicated to other network nodes and/or to the central controller. Accordingly, each network node and/or the central controller may then update its addressing and routing table.

According to a second aspect, there is provided a central controller of an intra-building communications network, comprising: allocation logic operable to allocate each of a plurality of network nodes to a plurality of different networks, each network node being operable to establish a plurality of communications links with at least another network node, each communications link utilising a corresponding one of a plurality of different communications media, each network having a set of network nodes having communications links with other network nodes in the set which utilise the same communications media.

In one embodiment, the central controller is operable to allocate each different network a unique network identifier and to instruct one network node within each set to operate as a controller to allocate each network node a unique node identifier within that network.

In one embodiment, the communications media may comprise one or more different wired communications media and/or one or more different wireless communications media.

In one embodiment, the unique node identifier is indicative of a node's hierarchical position in that network.

In one embodiment, the central controller is operable to store received unique node identifiers in a central addressing table.

In one embodiment, the central controller is operable to receive details of other of the plurality of different networks not connected to by a network node.

In one embodiment, the central controller is operable upon receipt of the details to instruct the network nodes operable as the controller for the other of the plurality of different networks to cease as the controllers.

In one embodiment, the central controller is operable to store received propagation delays in a central routing table.

In one embodiment, the central controller is operable on receipt of the originating message to determine from a messaging table at least one resultant message to be transmitted to the at least one destination network node.

In one embodiment, the central controller is operable to determine from the central addressing table and the central routing table a routing path having a least number of hops from the central controller to the at least one destination network node.

In one embodiment, the central controller is operable to transmit the resultant message to a network node indicated by the routing path as being a first hop along the routing path.

According to a third aspect, there is provided a network node of an intra-building communications network, comprising: communications logic operable to establish a plurality of communications links with at least another network node, each communications link utilising a corresponding one of a plurality of different communications media.

In one embodiment, the communications media may comprise one or more different wired communications media and/or one or more different wireless communications media.

In one embodiment, the unique node identifier is indicative of a node's hierarchical position in that network.

In one embodiment, each network node has a plurality of unique node identifiers, one for each of the plurality of different networks.

In one embodiment, each network node is operable to communicate its unique node identifiers to the central controller.

In one embodiment, each network node may store an indication of its parent within the network and is operable to communicate in preference with its parent when providing information to the central controller.

In one embodiment, each network node is operable to store the node identifiers communicated to the central controller via that node in a node-addressing table.

In one embodiment, each network node is operable, upon detection of a plurality of different networks utilising the same communications media, to connect to one of the plurality of different networks and to communicate details of other of the plurality of different networks to the central controller.

In one embodiment, each network node is operable to store unique identifiers of other network nodes on any network having a one-hop connection in the node-addressing table.

In one embodiment, each network node is operable to communicate the unique identifiers of other network nodes on any network having a one-hop connection to other network nodes and/or the central controller.

In one embodiment, each network node is operable to determine a propagation delay for each communications link with other network nodes having a one-hop connection.

In one embodiment, each network node is operable to communicate its propagation delays for each communication link with other network nodes having a one-hop connection to the central controller via network nodes.

In one embodiment, each network node is operable to store the propagation delays communicated to the central controller via that node in a node routing table.

In one embodiment, each network node is operable upon initiation of an originating message to communicate that originating message to the central controller for routing to at least one destination network node.

In one embodiment, the network node is operable to determine from the node addressing table and the node routing table a re-evaluated routing path from the network node to the at least one destination network node having a least propagation delay.

In one embodiment, the network node is operable to transmit the resultant message to a network node indicated by the re-evaluated routing path as being a next hop along the re-evaluated routing path.

In one embodiment, each network node is operable, in the event that the resultant message fails to be transmitted to the network node indicated as being the next hop, to update its routing table to indicate a loss of that communications link, to determine from the updated routing table an updated re-evaluated path from the network node to the destination network node having a least propagation delay and to transmit the resultant message to a network node indicated by the updated re-evaluated path as being a next hop.

In one embodiment, the revised routing table and/or addressing table is communicated to other network nodes and/or to the central controller.

According to a fourth aspect, there is provided a method of intra-building communication, comprising the steps of: providing a plurality of network nodes, each network node being operable to establish a plurality of communications links with at least another network node, each communications link utilising a corresponding one of a plurality of different communications media; and allocating each network node to a plurality of different networks, each network having a set of network nodes having communications links with other network nodes in the set which utilise the same communications media.

In one embodiment, the method comprises the step of allocating each different network a unique network identifier and allocating each network node a unique node identifier within that network.

In one embodiment, the communications media may comprise one or more different wired communications media and/or one or more different wireless communications media.

In one embodiment, the unique node identifier is indicative of a node's hierarchical position in that network.

In one embodiment, each network node has a plurality of unique node identifiers, one for each of the plurality of different networks.

In one embodiment, the method comprises the steps of: communicating to the central controller each network node's unique node identifiers; and storing the unique node identifiers for those networks in a central addressing table.

In one embodiment, the method comprises the steps of: storing an indication of a network node's parent within the network; and communicating in preference with its parent when providing information to the central controller.

In one embodiment, the method comprises the step of storing the node identifiers communicated to the central controller in a node-addressing table.

In one embodiment, the method comprises the steps of: upon detection of a plurality of different networks utilising the same communications media, connecting to one of the plurality of different networks; and communicating details of other of the plurality of different networks to the central controller.

In one embodiment, the method comprises the step of upon receipt of the details, instructing the network nodes operable as the controller for the other of the plurality of different networks to cease as the controllers.

In one embodiment, the method comprises the step of storing unique identifiers of other network nodes on any network having a one-hop connection in the node-addressing table.

In one embodiment, the method comprises the steps of: communicating the unique identifiers of other network nodes on any network having a one hop connection to other network nodes and/or the central controller; and generating a routing table indicative of communications links between network nodes.

In one embodiment, the method comprises the step of determining a propagation delay for each communications link with other network nodes having a one-hop connection.

In one embodiment, the method comprises the steps of: communicating propagation delays for each communication link with other network nodes having a one hop connection to the central controller via network nodes; and storing the propagation delays in an central routing table.

In one embodiment, the method comprises the step of storing the propagation delays communicated to the central controller via that node in a node routing table.

In one embodiment, the method comprises the step of upon initiation of an originating message, communicating that originating message to the central controller for routing to at least one destination network node.

In one embodiment, the method comprises the step of on receipt of the originating message, determining from a messaging table at least one resultant message to be transmitted to the at least one destination network node.

In one embodiment, the method comprises the step of determining from the central addressing table and the central routing table a routing path having a least number of hops from the central controller to the at least one destination network node.

In one embodiment, the method comprises the step of transmitting the resultant message to a network node indicated by the routing path as being a first hop along the routing path.

In one embodiment, the method comprises the step of determining from the node addressing table and the node routing table a re-evaluated routing path from the network node to the at least one destination network node having a least propagation delay.

In one embodiment, the method comprises the step of transmitting the resultant message to a network node indicated by the re-evaluated routing path as being a next hop along the re-evaluated routing path.

In one embodiment, the method comprises the steps of: in the event that the resultant message fails to be transmitted to the network node indicated as being the next hop, updating a routing table to indicate a loss of that communications link, determining from the updated routing table an updated re-evaluated path from the network node to the destination network node having a least propagation delay and transmitting the resultant message to a network node indicated by the updated re-evaluated path as being a next hop.

In one embodiment, the method comprises the step of communicating the revised routing table and/or addressing table to other network nodes and/or to the central controller.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figures 1 to 7 illustrate building an intra-home communications network according to one embodiment;
Figure 8 illustrates major processing steps performed by network nodes illustrated in Figures 1 to 8;
Figure 9 illustrates major processing steps performed by the central controller illustrated in Figures 1 to 9;
Figure 10 illustrates an example deployment of network nodes and the central controller of Figures 1 to 9;
Figure 11 illustrates an example routing table of the central controller of Figure 7; and
Figure 12 illustrates an example forward and reverse routing table of a network node of Figure 7.

### DESCRIPTION OF THE EMBODIMENTS

### OVERVIEW

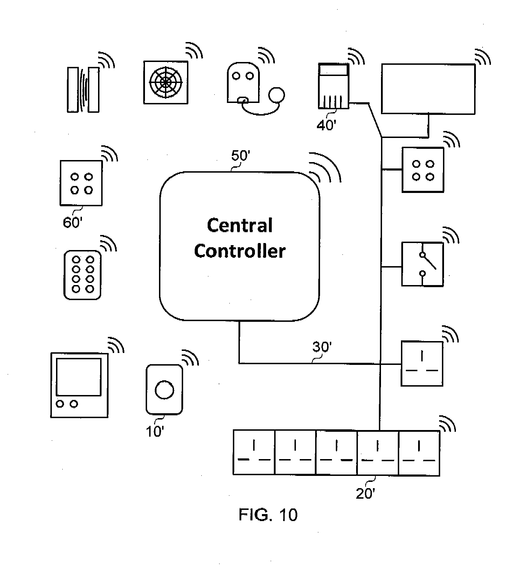

Figure 10 illustrates an example deployment of an intra-home communications network according to one embodiment. The example illustrated in Figure 10 is a retro-fit home automation solution for the consumer market. However, it will be appreciated that other implementations may be used in industrial and enterprise situations.

In overview, the intra-home communications network comprises a central controller 50' which is operable to support multiple networks using different communications media. In this example, the central controller 50' utilises wired and wireless communications media. In particular, the central controller 50' in this arrangement is operable to establish both a powerline and a ZigBee (trademark) network, although it will be appreciated that other network types may be established using other communications media. For example, the multiple different wired communications media and/or multiple different wireless communications media may be utilised to establish different networks.

A number of different network nodes are also provided which can communicate using more than one communications media. In this example, network nodes are provided which can communicate using both powerline and ZigBee (trademark) communications links. In addition to those network nodes, other network nodes which utilise less than all of the different communications media are provided. Equally, network nodes may support networks over communications links using communications media not supported by the central controller 50'. Some of the network nodes may only communicate using ZigBee (trademark), whilst others may only communicate using powerline. It will be appreciated that such reduced communications media network nodes may have utility at non-central areas of the network and devices which operate only wirelessly may have particular utility as remote devices, where providing a wired link to those devices is impractical. The network nodes which can support multiple communications media links are particularly effective at improving the robustness of the communications network. In particular, as will be explained in more detail below, such network nodes will utilise the different communications links dependent upon the intended destination of a particular message and any network disruption that may be taking place. For example, such multiple media communications link network nodes may select one communications link to another network node normally, but utilise another communications link to that network node when the normal communications link is disrupted or may utilise other network nodes should a portion of a network fail.

The central controller 50' controls the initialisation, management and operation of the whole network. Network nodes within the network may support local networks established using communications media not directly supported by the central controller 50' itself. As network nodes are enabled, they attempt to connect to any available networks established under the control of the central controller 50. The central controller 50' may instruct network nodes to operate as local network coordinators to control individual networks which are not directly controlled of the central controller 50. The central controller 50' and the network nodes maintain addressing tables and routing tables which describe the whole or portions of the network. Any messages generated by network nodes due to, for example, their activation either by a user or through some other automated process are routed back to the central controller 50' which then establishes what action needs to be taken. The central controller 50' utilises a message lookup table which identifies the consequential action required upon receipt of each message. Should that messaging table indicate that a message needs to be transmitted to one or more particular destination network nodes, then the central controller 50' transmits that message through one of the attached networks, typically to be received by one or more intermediate network nodes for onward transmission to the destination node through the same or different networks. The selection of the routing is adapted dynamically depending on the status of the network as the message is routed. Also, messages which fail to be routed in the way intended by the central controller 50' may be re-routed by the intervening network nodes to ensure that the message reaches its destination. For example, the wireless doorbell switch 10' illustrated in Figure 10 may be activated and because of some disruption in the wireless signal between the wireless doorbell switch 10' and the central controller 50', the message may instead be wirelessly routed to the five-way socket 20' which, in turn, may forward that over the powerline connection 30' to the central controller 50'. The central controller 50' determines that, on receipt of the message from the wireless doorbell switch 10', a message should be sent to the plug-in doorbell 40'. However, due to interference now on the powerline network 30', the central controller 50' may instead transmit the message to the wireless light 60' which, in turn, transmits the message onto the plug-in doorbell 40'.

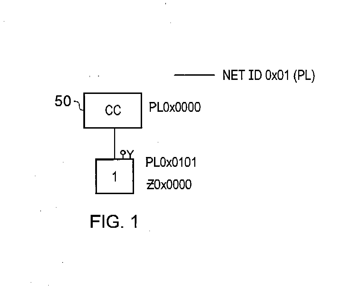

More details on the network components, as well as the establishment and operation of an example network will now be described with reference to Figures 1 to 9.

### NETWORK COMPONENTS

As shown in Figure 1, a central controller 50 is provided. The central controller 50 in this example is operable to establish both a powerline and a ZigBee (trademark) network, and is able to control network nodes which are able to establish other networks. The central controller 50 maintains an addressing table which provides a unique network identifier for each different network, together with a unique network node identifier for each network node on each different network. The combination of the unique network identifier together with the unique network node identifier uniquely identifies a single network node. The central controller 50 also maintains a routing table which identifies the different communications links between each network node. The central controller 50 is operable to determine the functionality of network nodes and, in particular, the types of networks supported by those network nodes.

The network nodes are operable to support one or more communications link over one or more communications media. As show in Figure 1, network node 1 is operable to establish both a powerline and a ZigBee (trademark) network. Network node 1 also maintains an addressing table which provides a unique network identifier for each different network, together with a unique network node identifier for each network node on each different network to which network node 1 is directly connected (i.e. those network nodes which have a one hop connection with network node 1 ). In addition, network node 1 maintains in its addressing table the address of the central controller 50 (which is typically set to a predetermined address such as 0x00:0x0000) and the controller of the networks to which it is connected (which in this case is only the central controller 50). These addresses are also associated with a unique entity identifier (e.g. the address are associated each entity such as a network node or the central controller 50 as will be explained in more detail below). Network node 1 also maintains a routing table which identifies the different communications links between each network node. As nodes join the network, the central controller 50 will provide a reverse routing table (i.e. an indication of the network nodes between that joining network node and the central controller 50) to the to the joining network node and any forward routing tables (i.e. an indication of the network nodes between any network node and the joining network node) are updated in other network nodes as details of the joining network node are promulgated through the network. These routing tables indicate the unique entity identifiers of the network nodes and the links between them, but do not necessarily indicate all the addresses of the network nodes. Hence, it can be seen that each node is able to determine the addresses of those network nodes which have a one-hop connection, addresses of the network controllers of the networks to which that nodes belongs, the address of the central controller 50, and the unique entity identifiers of those devices from its addressing table. Also, each node is able to determine details of connections between devices, and the unique entity identifiers of those devices from its routing tables. Network node 1 is operable to be controlled by the central controller 50 and, in particular, to identify to the central controller 50 the types of networks supported by that network node and its functionality.

### NETWORK INITIATION - CENTRAL CONTROLLER

The central controller 50, on initiation, performs a number of self-checking procedures and configures itself as a powerline concentrator. The central controller 50 will allocate a unique network identifier to the powerline network. In this example, the central controller 50 allocates a network ID 0x01 to the powerline network. The central controller 50 also allocates itself the address identified with being the concentrator of the powerline network. In this example, the powerline concentrator is identified by the network address 0x0000. The central controller 50 then waits for network nodes to join the network.

### NETWORK INITIATION - NODE 1

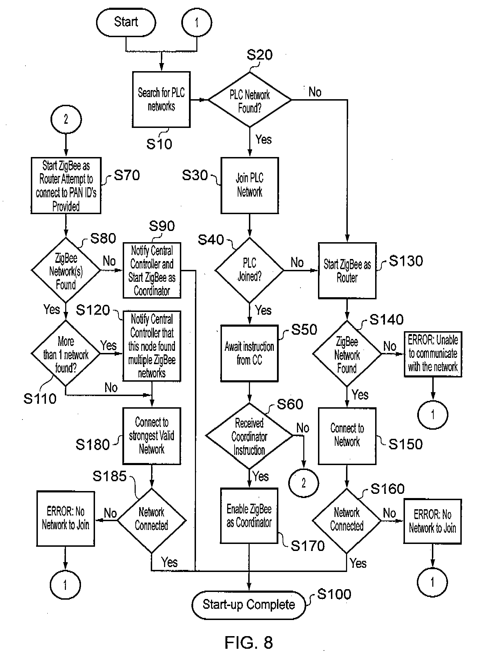

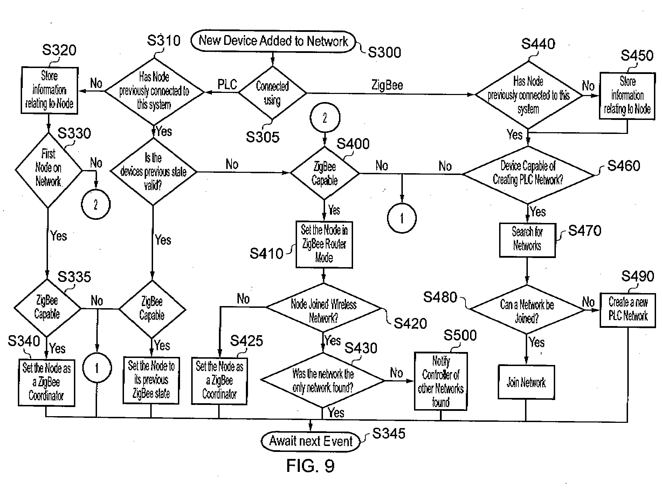

As shown in Figure 1, network node 1 is activated and attempts to join a network. Network node 1 is operable to communicate using both powerline and ZigBee (trademark) (as denoted by the antenna and network symbols on that node). The main steps taken by the network nodes and by the central controller 50 during initiation are illustrated in Figures 8 and 9, respectively.

At step S10 of Figure 8, the network node 1 searches for a powerline connection. At step S20, network node 1 identifies a powerline network having a network ID 0x01 for which the central controller 50 is the concentrator. At step S30, network node 1 requests that it be allowed to join the powerline network. Such requests includes an indication to the central controller 50 that the network node 1 is a device suitable for connecting this network and includes a type identifier which indicates to the control controller 50 the capabilities of the network node 1. In this example, network node 1 is unable to connect to the central controller 50 using the ZigBee (trademark) network due to attenuation of the wireless signal between network node 1 and the central controller 50.

Meanwhile, at step S300 of Figure 9, the central controller 50 becomes aware of the request to join the network. The central controller 50 then determines at step S305 whether the request is to join the powerline or the ZigBee (trademark) network. The central controller 50 determines the request is to join the powerline network and then determines at step S310 whether network node 1 has previously connected to this network. In this example, network node 1 is new to the network and so, at step S320, the central controller 50 stores the information provided by network node 1. The network node 1 is permitted to join the powerline network and is allocated the address 0x0101.

At step S40, network node 1 determines whether the powerline network has been correctly joined and, at step S50, the network node 1 then awaits further communication from the central controller 50.

At step S330, the central controller 50 determines whether network node 1 is the first node on this powerline network. In this example, network node 1 is not the first node on the powerline network (the central controller 50 was the first node on this powerline network) and so, at step S400, the central controller 50 determines from the type information provided by network node 1 whether network node 1 has ZigBee (trademark) capabilities. In this example, network node 1 has ZigBee (trademark) capabilities and so, at step S410, the central controller 50 instructs network node 1 to be a ZigBee (trademark) router. At step S420, no ZigBee (trademark) network is connected to and so, at step S425, the central controller 50 instructs network node 1 to be a ZigBee (trademark) coordinator. The central controller 50 allocates the ZigBee (trademark) network supported by the network node 1 as having network ID 0x02. At step S345, the central controller then awaits another device connection event.

At step S60, network node 1 determines whether a coordinator instruction has been received from the central controller 50. In this example, a coordinator instruction is received from the central controller 50 and so network node 1, at step S170 initialises as a ZigBee (trademark) coordinator. Network node 1 then reports the network ID 0x02 and the unique identifier of 0x0000 (the default address of a ZigBee (trademark) coordinator) to the central controller 50. At step S100, the setup of network node 1 is now complete.

Both the central controller 50 and network node 1 update their addressing and routing tables. The central controller 50 now contains in its addressing table the addresses 0x01:0x0101 and 0x02:0x0000 for network node 1. Likewise, network node 1 contains the address 0x01:0x0000 for the central controller 50. Furthermore, the central controller 50 and network node 1 contain a routing table which contains details of the powerline connection between the central controller 50 and network node 1.

### NETWORK INITIATION - NODES 2 AND 3

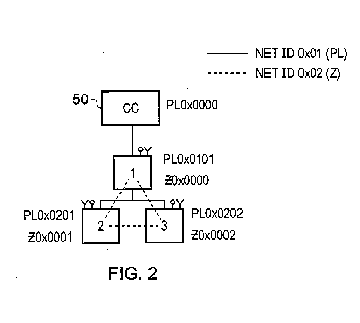

Next, as shown in Figure 2, network nodes 2 and 3 are activated. Network node 2 and 3 are operable to communicate using both powerline and ZigBee (trademark). At step S10, both network nodes 2 and 3 search for a powerline network and, at step S20, find the powerline network. At step S30, both network nodes 2 and 3 request that they be allowed to join the powerline network. Such requests includes an indication to the central controller 50 that network nodes 2 and 3 are devices suitable for connecting this network and includes a type identifier which indicates to the control controller 50 the capabilities of network nodes 2 and 3.

Meanwhile, the central controller 50, at step S300, note that each of network nodes 2 and 3 have requested to join the powerline network. The central controller 50 then determines at step S305 whether the requests are to join the powerline or the ZigBee (trademark) network. The central controller 50 determines the requests are to join the powerline network and then determines at step S31 0 that network nodes 2 and 3 have not previously connected to this network. Accordingly, at step S320, the central controller 50 stores information relating to network nodes 2 and 3. The central controller 50, which is the coordinator for the powerline network, allocates an address of 0x0201 to network node 2 and 0x0202 to network node 3 (both of which share the network ID 0x01).

At step S40 the powerline network is joined and, at step S50, network nodes 2 and 3 await a coordinator instruction from the central controller 50.

At step S330, it is determined that network nodes 2 and 3 are not the first nodes on that powerline network and so, at step S400, the central controller 50 determines from the type information whether network nodes 2 and 3 are ZigBee (trademark) capable. In this example, both network nodes 2 and 3 are ZigBee (trademark) capable and so, at step S41 0, the central controller 50 instructs network nodes 2 and 3 to enter the ZigBee (trademark) router mode and provides the ZigBee (trademark) network ID 0x02.

At step S60, network nodes 2 and 3 receive those instructions from the central controller 50 and, at step S70, attempt to connect to the ZigBee (trademark) network having a network ID 0x02. At step S80, a check is made of whether the ZigBee (trademark) network has been found. At step S110, a determination is made of whether more than one ZigBee (trademark) network has been found. In this example, no further networks are found and so, at step S 180, network node 1 (which is the coordinator for this ZigBee (trademark) network) is informed of the presence of nodes 2 and 3 on the ZigBee (trademark) network. Network node 1 allocates the addresses 0x0001 and 0x0002 to network nodes 2 and 3 respectively. Network nodes 2 and 3 connect to the ZigBee (trademark) network. At step S185, network node 2 and 3 confirm they are connected to the ZigBee (trademark) network, network node 1 then informs the central controller 50 of the ZigBee (trademark) addresses for network nodes 2 and 3 and, at step S100, the start up procedure for network nodes 2 and 3 completes.

Accordingly, at step S420, the central controller 50 determines that network node 2 and 3 have joined the ZigBee (trademark) network. At step S430, the central controller 50 determines that no indication has been received that network nodes 2 and 3 detected any further networks. Accordingly, the central controller 50 updates its addressing table to include the network address of 0x01:0x0201 and 0x02:0x0001 for node 2 and 0x01:0x0202 and 0x02:0x0002 for node 3. Each of the network nodes store the addresses of those network nodes which are a one hop connection from them, together with the addresses of their network controllers and that of the central controller 50. In this example, network nodes 2 and 3 contain the address 0x01:0x0000 for the central controller 50, the address of node 1 (the controller for the ZigBee (trademark) network) and the powerline and ZigBee (trademark) addresses of each other. The addressing table of network node 1 is augmented to include the powerline and ZigBee (trademark) addresses of network nodes 2 and 3. Furthermore, the central controller 50 and network node 1, 2 and 3 contain a routing table which contains details of the powerline and ZigBee (trademark) connections between the central controller 50 and network nodes 1, 2 and 3. At step S345, the central controller then awaits another device connection event.

### NETWORK INITIATION - NODES 9,10,11, 12 AND 13

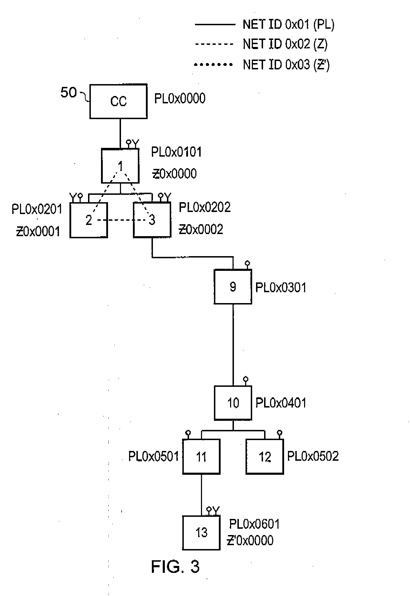

As shown in Figure 3, network nodes 9, 10, 11, 12 and 13 are each now activated. Network nodes 9 to 12 are only operable to communicate using powerline, whereas network node 13 is operable to communicate using both powerline and ZigBee (trademark).

Accordingly, each of nodes 9 to 13 search, at step S10, for the powerline network. At step S20, each of network nodes 9 to 13 identify the powerline network. At step S30, network nodes 9 to 13 request that they be allowed to join the powerline network. Such requests includes an indication to the central controller 50 that network nodes 9 to 13 are devices suitable for connecting this network and includes a type identifier which indicates to the control controller 50 the capabilities of the network nodes 9 to 13.

Meanwhile, the central controller 50, at step S300, note that each of network nodes 9 to 13 have requested to join the powerline network. The central controller 50 then determines at step S305 whether the requests are to join the powerline or the ZigBee (trademark) network. The central controller 50 determines the requests are to join the powerline network and then determines at step S310, that none of these network nodes have previously been connected to that network. Accordingly, at step S320, the central controller 50 stores information relating to the network nodes 9 to 13. The central controller 50, which is the coordinator for the powerline network, allocates an address of 0x0301 to network node 9, 0x0401 to network node 10, 0x0501 to network node 11, 0x0502 to network node 12 and 0x0601 to network node 13 (each of which share the network ID 0x01).

At step S40, network nodes 9 to 13 determine that they have joined the powerline network and, at step S50 await a coordinator instruction.

At step S330, the central controller 50 determines that these are not the first nodes on the powerline network and so, at step S400, the central controller 50 determines from the type information whether network nodes 9 to 13 are ZigBee (trademark) capable. In this example, only network node 13 is ZigBee (trademark) capable and so, at step S410, the central controller 50 performs no further processing steps for network nodes 9 to 12 and instead, at step S345, awaits the next event. Meanwhile, the central controller 50 determines that network node 13 is ZigBee (trademark) capable and, at step S410, instructs network node 13 to enter the ZigBee (trademark) router mode and provides the ZigBee (trademark) network ID 0x02.

At step S60, network node 13 does not receive a coordinator instruction and so, at step S70, network node 13 starts as a ZigBee (trademark) router and attempts to connect to the existing ZigBee (trademark) network which has network ID 0x02 provided by the central controller 50. At step S80, because network node 13 is out of range, it cannot connect to the existing ZigBee (trademark) network. Accordingly, at step S90, network node 13 notifies the central controller 50 and starts as a ZigBee (trademark) coordinator.

Meanwhile, at step S420, the central controller 50 receives the notification that network node 13 cannot connect to the existing ZigBee (trademark) network and, at step S425, confirms to network node 13 that it should start as a ZigBee (trademark) coordinator and allocates a network ID 0x03 for the ZigBee (trademark) network coordinated by network node 13.

The central controller 50 updates its addressing table to include the network address of 0x01:0x0301 for node 9, 0x01:0x0401 for node 10, 0x01:0x0501 for node 11, 0x01:0x0502 for node 12, and 0x01:0x0601 together with 0x03:0x0000 for node 13. Each of the network nodes store the addresses of those network nodes which are a one hop connection from them, together with the addresses of their network controllers (in this case the central controller 50). The addressing tables of the existing nodes are updated likewise. Furthermore, the central controller 50 and the network nodes contain a routing table which contains details of the powerline and ZigBee (trademark) connections between the central controller 50 and the network nodes. At step S345, the central controller then awaits another device connection event.

### NETWORK INITIATION - NODES 14 AND 15

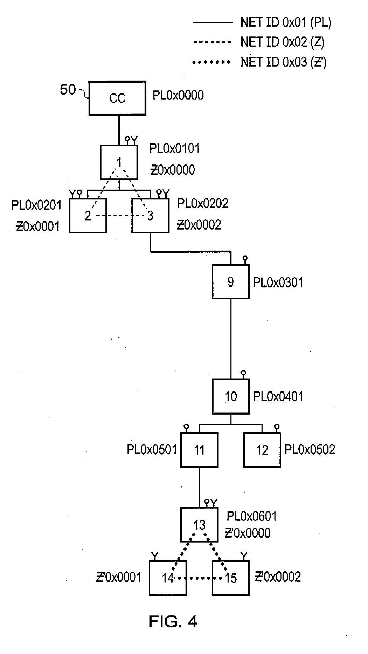

As shown in Figure 4, network nodes 14 and 15 are activated. Network node 14 and 15 are operable to communicate using ZigBee (trademark) only. At steps S10 and S20, neither network nodes 14 and 15 can join a powerline network and so, at step S130, both network nodes 14 and 15 start as ZigBee (trademark) routers. At step S140, network nodes 14 and 15 both identify the ZigBee (trademark) network having network ID 0x03 established by network node 13. Accordingly, as step S150, both network nodes 14 and 15 join that ZigBee (trademark) network and are allocated addresses by network node 13. At step S160, network nodes 14 and 15 determine that they are now connected the ZigBee (trademark) network and the start-up process then completes. Network node 13, which is the ZigBee (trademark) coordinator for that ZigBee (trademark) network informs the central controller 50 of the presence of the network nodes 14 and 15.

The central controller 50, at step S300, determines that a new device has connected to the network and, at step S305, determines that network nodes 14 and 15 have connected using ZigBee (trademark). At step S440, the central controller 50 determines that these network nodes have not previously connected and so, at step S450, stores information relating to those network nodes. At step S460, the central controller 50 determines from their type information that network nodes 14 and 15 are not capable of connecting to a powerline network.

The central controller 50 updates its addressing table to include the network address of 0x03:0x0001 for node 14 and 0x03:0x0002 for node 15. Each of the network nodes store the addresses of those network nodes which are a one hop connection from them, together with the addresses of their network controllers (in this can network node 13). The addressing table of network node 13 is also updated. Furthermore, the central controller 50 and the network nodes contain a routing table which contains details of the powerline and ZigBee (trademark) connections between the central controller 50 and the network nodes. At step S345, the central controller then awaits another device connection event.

### NETWORK INITIATION - NODES 4 AND 5

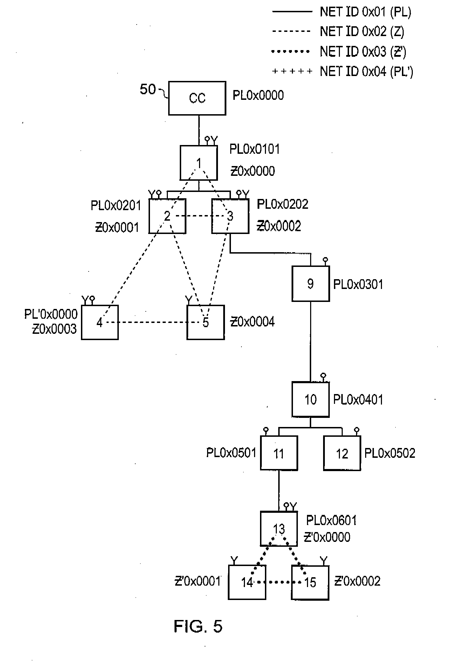

As shown in Figure 5, network nodes 4 and 5 are activated. Network node 5 is only operable to communicate using ZigBee (trademark), whereas network node 4 is operable to communicate using both powerline and ZigBee (trademark).

At steps S10 and S20, neither network nodes 4 and 5 can join a powerline network and so, at step S130, both network nodes 4 and 5 start as ZigBee (trademark) routers. At step S 140, network nodes 4 and 5 both identify the ZigBee (trademark) network having network ID 0x02 established by network node 1. Accordingly, as step S150, both network nodes 4 and 5 join that ZigBee (trademark) network and are allocated addresses by network node 1. At step S160, network nodes 4 and 5 determine that they are now connected the ZigBee (trademark) network.

Network node 1, which is the ZigBee (trademark) coordinator for that ZigBee (trademark) network informs the central controller 50 of the presence of the network nodes 4 and 5.

The central controller 50, at step S300, determines that a new device has connected to the network and, at step S305, determines that network nodes 4 and 5 have connected using ZigBee (trademark). At step S440, the central controller 50 determines that these network nodes have not previously connected and so, at step S450, stores information relating to those network nodes. At step S460, the central controller 50 determines from their type information that network node 5 is not capable of connecting to a powerline network. However, the central controller 50 notes that network node 4 is operable to support a powerline network and so, at step S470, instructs network node 4 to search for a powerline network. At step S480, the central controller 50 determines that network node 4 is unable to join an existing powerline network and so, at step S490, instructs network node 4 to operate as a concentrator for a new powerline network having a network ID 0x04.

The central controller 50 updates its addressing table to include the network address of 0x01:0x0003 and 0x04:0x0000 for node 4 and 0x02:0x0004 for node 5. Each of the network nodes store the addresses of those network nodes which are a one hop connection from them, together with the addresses of their network controllers (in this case network node 1) and that of the central controller 50. The addressing tables of network nodes 2 and 3 are updated likewise. Furthermore, the central controller 50 and the network nodes contain a routing table which contains details of the powerline and ZigBee (trademark) connections between the central controller 50 and the network nodes. At step S345, the central controller then awaits another device connection event.

### NETWORK INITIATION - NODES 6, 7 AND 8

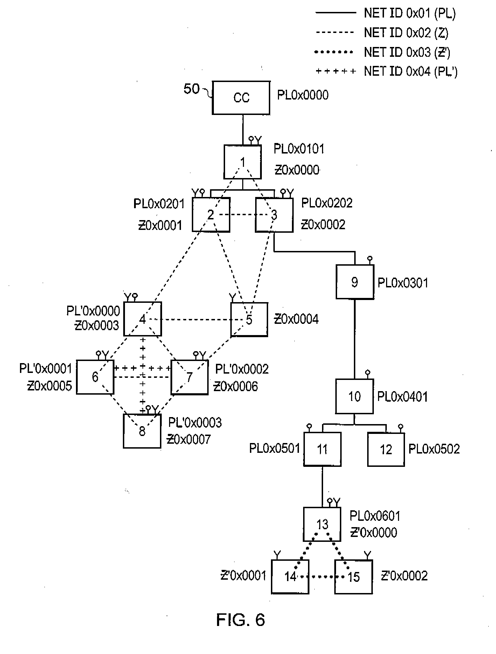

As shown in Figure 6, network nodes 6, 7 and 8 are activated. Network nodes 6, 7 and 8 are operable to communicate using both powerline and ZigBee (trademark).

Accordingly, at step S10, the network nodes 6 to 8 each search for a powerline network. At step S20, each of network nodes 6 to 8 find the powerline network having a network ID 0x04 supported by network node 4. At step S30, network nodes 6 to 8 request to join this powerline network and are allocated network addresses by the network node 4. Accordingly, at step S40, network nodes 6 to 8 establish that they have joined the powerline network. At step S50, network nodes 6 to 8 await a coordinator instruction from the central controller 50.

Meanwhile, at step S300, the central controller 50 will be informed by network node 4 that network node 6 to 8 have joined the powerline network and, at step S305, determines that network nodes 6 to 8 have connected using powerline. At step S310, the central controller 50 determines that these network nodes have not previously connected and so, at step S320, stores information relating to those network nodes.

At step S330, the central controller 50 determines whether network nodes 6 to 8 are the first nodes on this powerline network. In this example, network nodes 6 to 8 are not the first nodes on the powerline network (network node 4 was the first node on this powerline network) and so, at step S400, the central controller 50 determines from the type information provided by network node 4 whether network nodes 6 to 8 have ZigBee (trademark) capabilities. In this example, network nodes 6 to 8 have ZigBee (trademark) capabilities and so, at step S41 0, the central controller 50 instructs network nodes 6 to 8 to be ZigBee (trademark) routers, together with the network IDs 0x02 and 0x03.

At step S60, network nodes 6 to 8 receive those instructions from the central controller 50 and, at step S70, attempt to connect to the ZigBee (trademark) network having a network IDs 0x02 or 0x03. At step S80, a check is made of whether the ZigBee (trademark) network has been found. At step S110, a determination is made of whether more than one ZigBee (trademark) network has been found. In this example, no further networks are found and so, at step S 180, network node 1 (which is the coordinator for this ZigBee (trademark) network) is informed of the presence of nodes 6 to 8 on the ZigBee (trademark) network. Network node 1 allocates the addresses 0x0005, 0x0006 and 0x0007 to network nodes 6, 7 and 8, respectively. Network node 1 then informs the central controller 50 of the ZigBee (trademark) addresses for network nodes 6 to 8. At step S185, network nodes 6 to 8 connect to the ZigBee (trademark) network.

At step S420, the ZigBee (trademark) network is connected to and so, at step S430, the central controller 50 determines that no further ZigBee (trademark) networks were reported by network nodes 6 to 8.

The central controller 50 updates its addressing table to include the network address of 0x04:0x0001 and 0x02:0x0005 for node 6, 0x04:0x0002 and 0x02:0x0006 for node 7 and 0x04:0x0003 and 0x02:0x0007 for node 8. Each of the network nodes store the addresses of those network nodes which are a one hop connection from them, together with the addresses of their network controllers (in this case network nodes 1 and 4) and that of the central controller 50. The addressing tables of network nodes 4 and 5 are updated likewise. Furthermore, the central controller 50 and the network nodes contain a routing table which contains details of the powerline and ZigBee (trademark) connections between the central controller 50 and the network nodes. At step S345, the central controller then awaits another device connection event.

### NETWORK INITIATION - NODE 16

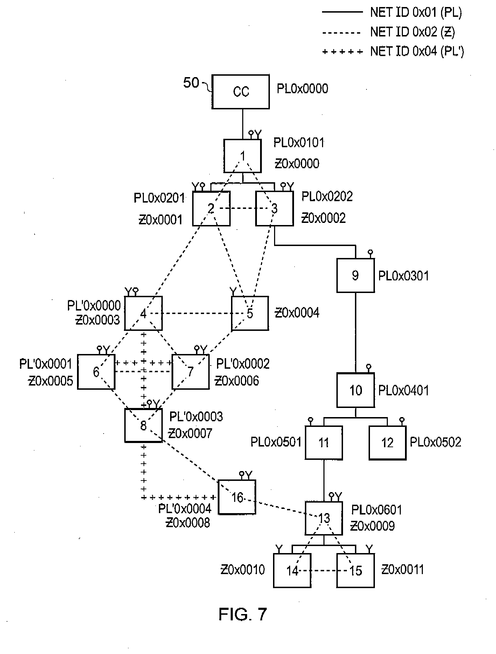

As shown in Figure 7, network node 16 is activated. Network node 16 is operable to communicate using both powerline and ZigBee (trademark).

Accordingly, at step S10, network node 16 will search for a powerline network and, at step S20, will find the powerline network having a net ID 0x04 supported by network node 4. At step S30, network node 16 will request to join the powerline network and will be allocated a network address by network node 4. At step S40, network node 16 will then join the powerline network. At step S50, network node 16 then awaits further communication from the central controller 50.

Meanwhile, at step S300, the central controller 50 will be informed by network node 4 that network node 16 has joined the powerline network. At step S310, the central node will determine that the node has not previously connected to the network and will store the information provided about the node at step S320. At step S330, the central controller 50 will determine that network node 16 is not the first node on the powerline network and so, at step S400, the central controller 50 determines from the type information provided by network node 4 whether network node 16 has ZigBee (trademark) capabilities. In this example, network node 16 has ZigBee (trademark) capabilities and so, at step S410, the central controller 50 instructs network node 16 to be a ZigBee (trademark) router, together with the network IDs 0x02 and 0x03.

At step S60, network node 16 receive those instructions from the central controller 50 and determines that it has not received a coordinator instruction and so, at step S70, will attempt to connect to the ZigBee (trademark) networks having network IDs 0x02 or 0x03 provided by the central controller 50. At step S80 network node 16 searches for these networks. In this example, network node 16 finds both ZigBee (trademark) networks and, at step S120, notifies the central controller 50 that more than one network was found. At step S180, network node 16 connects to the network having the strongest signal. In this example, network node 16 connects to the ZigBee (trademark) network having the network ID 0x02 which is controlled by network node 1. At step S185, network node 16 confirms it is connected to the ZigBee (trademark) network, network node 1 then informs the central controller 50 of the ZigBee (trademark) addresses for network node 16, at step S100, the start up procedure for network node 16 completes.

At step S420, the central controller 50 determines that network node 16 has joined the ZigBee (trademark) network. At step S430, the central controller 50 determines that an indication has been received that network node 16 detected further networks. Accordingly, at step S500, the central controller 50 instructs network node 13, which is the coordinator of the ZigBee (trademark) network having network ID 0x03 to cease as a ZigBee (trademark) coordinator and instead operate as a ZigBee (trademark) router and search for the ZigBee (trademark) network having net ID 0x02. Network node 13 then identifies the ZigBee (trademark) network connection to network node 16 and connects to this network. Likewise, network nodes 14 and 15 both re-establish ZigBee (trademark) connections with network node 13 on the ZigBee (trademark) network having net ID 0x02. Network node 1, which is the ZigBee (trademark) coordinator for that ZigBee (trademark) network informs the central controller 50 of the presence of the network nodes 13, 14 and 15.

The central controller 50 updates its addressing table to include the network address of 0x02:0x0009 for node 13, 0x02:0x0010 for node 14, 0x02:0x0011 for node 15 and 0x04:0x0004 and 0x02:0x0008 for node 16. Network nodes 8 and 13 to 16 then each update their addressing tables to indicate the nodes to which they are a one-hop connection, together with the addresses of their network controllers and that of the central controller 50. In this case, network node 16 contains the addresses for network node 8 and 13 (as one-hop connections), network nodes 4 and 1 as network controllers and the central controller 50. Network node 13 contains the addresses for network node 11, 16, 14 and 15 (as one-hop connections), network node 1 (as a network controller for the ZigBee (trademark) network) and the central controller 50 (also as a network controller for the powerline network). The addressing tables of network nodes 14 and 15 are updated likewise. Likewise, each of the network nodes update their routing tables and promulgate these routing tables through the network so that other network nodes can also update their routing tables, including the central controller 50. At step S345, the central controller then awaits another device connection event.

Accordingly, it can be seen that network connections can be established between network nodes and the network can grow and adapt based on the type and arrangement of network nodes within the network. It will be appreciated that changes to the network may also occur should individual network nodes be added, cease to operate or should disruptions occur to the communications links between the network nodes. For example, should the ZigBee (trademark) link with network nodes 16 cease to operate then network node 13 may re-establish its local ZigBee (trademark) network with network nodes 14 and 15. Once again, these changes will cause updates to the appropriate addressing and routing tables.

### LINK SPEEDS

Each network node periodically determines the transmission speed or propagation delay of each of its network connections, which is utilised when routing messages within the network. Typically, each network node will periodically transmit a message over each of its communications link which will be returned by the receiving network node and the round-trip delay will be stored by the originating network node. For example, network node 13 will send a message over the ZigBee (trademark) connection to nodes 14, 15 and 16 and will note the time taken for each of those nodes to respond. Likewise network node 13 will transmit a message to network node 11 and measure the time taken for that network node to respond. These times will then be associated with each of the communications link in the routing table to provide an indication of the speed of that communications link. For example, the communications link with network node 11 may be significantly faster than that with nodes 14 to 16. Furthermore, it may be that of the links with network nodes 14 to 16, the link with node 16 is the slowest. It will be appreciated that the speed of these links may vary with time. Also, depending on network type, only the one-hop link speeds may be indicated in any particular node's routing table or this information may be promulgated to other nodes, including the central controller 50, if such promulgation is supported by that network type.

### ROUTING TABLES

As mentioned above, the central controller 50 and each network node maintains routing tables based on information propagated through the network regarding the one-hop connections which exist between network nodes.

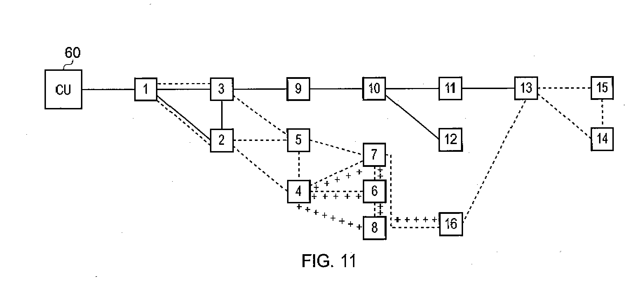

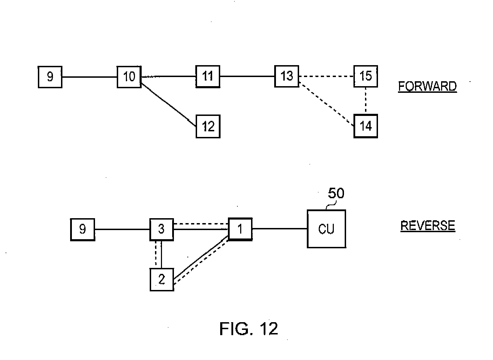

Figures 11 shows an example routing table for the central controller of the network illustrated in Figure 7. Likewise, Figure 12 shows an example routing table for network node 9 of the network illustrated in Figure 7. In this example, each network node maintains separate forward and reverse routing tables, whereas the central controller 50 need only maintain a forward routing table. As also mentioned above, each of those links are associated with a link speed of that link. From these tables it can be seen that the shortest hop route from one node to another can be determined.

### NETWORK OPERATION - MESSAGE ROUTING

### OVERVIEW

Now, the operation of the communications network will be described. In overview, messages originating at one network node are routed back using the reverse routing table to the central controller 50 for processing. The central controller 50 maintains a message table which indicates which messages should be sent upon receipt of any particular message from a network node. The programming of the message table will typically be performed centrally by the user based on the actions that are required in response to particular message generated by each network node in particular circumstances. For example, a network node may generate a particular message when a switch or sensor is actuated or when some pre-timed or pre-programmed event occurs. The user may then program the message table such that upon receipt of such a message certain other messages should be sent to other network nodes to cause them to respond. For example, upon activation of a switch or a sensor certain network nodes may need to provide a signal to cause lights to switch on, solenoids or motors to be powered, appliances to be activated, information to be displayed, or the like. Also, the messaging table may require more than one message to be transmitted to one or more different network nodes. For example, more than one alarm, light or appliance may be controlled in response to a single event. Likewise, broadcast messages may be sent simultaneously to more than one network node.

Accordingly, each network node is operable to determine from its reverse routing table a preferential route back to the central controller 50. This route is preferably based on the least number of hops possible between it and the central controller 50. For example, network node 12 may determine from its reverse routing table a preferential route via parent nodes 10, 9, 3 and 1 back to the central controller 50 (this is only 5 hops). From its routing table and addressing table, network node 12 is able to determine that the central controller 50 is on its powerline network having the network ID 0x01 and so is able to address messages intended for the central controller 50 to the central controller 50 itself. Network node 5 may determine from its reverse routing table that two preferential routes to the central controller 50 exist which are each three hops (either via nodes 2 and 1 back to the central controller 50 or via nodes 3 and 1 back to the central controller). Since there is more than one route, network node 5 will initially address messages to its network controller (network node 1 ) for subsequent forwarding to the central controller 50. Had that not been the case, then network node 5 would initially address messages to the network node which is the first hop on the shortest route to the central controller 50. Likewise, network node 16 may determine from its reverse routing table there is one shortest route (which is via network nodes 8, 4, 2 and 1 and on to the central controller 50. Hence, network node 16 will initially address messages to network node 8 for subsequent forwarding to the central controller 50. Of course, each network node will also be operable to determine other less preferable routes over which messages to the central controller 50 may be transmitted, if required. Also, each network node is operable to recognise the node from which it received a message and is operable to ensure that if that node is indicated from its routing table to be on the preferred path the central controller 50, then a less preferable route may instead selected to reduce the likelihood of message looping from occurring.

### INITIATE MESSAGE - INITIAL ADDRESSING FROM NETWORK NODE 16 TO NETWORK NODE 4

Hence, considering now the situation where network node 16 generates a message. network node 16 indicates in the message that the destination for the message is the central controller 50 by including a destination address of 0x01:0x0000. Network node 16 determines from its reverse routing table and addressing table that there is a route to the central controller 50 and that the preferential route indicated by the routing table for communicating with the central controller 50 is indicated to be to network node 8 and onto network node 4, then network node 2 and onto network node 1, then to the central controller 50 (this takes 5 hops). From the routing table, it is determined that the fastest link to network node 8 is via the powerline network (this may change over time dependent upon the status of the ZigBee (trademark) and the powerline links between these nodes and the situation could be different at another time). Accordingly, the message together with the destination address is initially addressed to network node 8 via the local powerline network at 0x04:0x0003. The message arrives at network node 8 which decodes the message and sends an acknowledgement back to network node 16 to confirm that the message has been safely received. In the event that no acknowledgement is received from network node 14 then network node 16 will instead transmit the message via the next preferential route, which in this case is still via network node 8, but on the ZigBee (trademark) network.

Network node 8 determines from its reverse routing table and addressing table that there is a route to the central controller 50 and that the preferential route indicated by the routing table for communicating with the central controller 50 is indicated to be to network node 4, then network node 2 and onto network node 1, then to the central controller 50 (this takes 4 hops). From the routing table, it is determined that the fastest link to network node 4 is via the powerline network (this is the only direct link). Accordingly, the message together with the destination address is addressed to network node 4 via the local powerline network at 0x04:0x0000.

### INITIATE MESSAGE - ADDRESSING FROM NETWORK NODE 4 TO NETWORK NODE 1

The message arrives at network node 4 which decodes the message and sends an acknowledgement back to network node 16 to confirm that the message has been safely received. In the event that no acknowledgement is received from network node 14 then network node 16 will instead transmit the message via the next preferential route, which in this case is via network nodes 6 or 7 on the ZigBee (trademark) network. Network node 4 determines from the destination address that this message is not intended for it, but rather is intended for the central controller 50. Accordingly, network node 4 determines from its routing table the preferred path the central controller 50. If the routing table indicated that the preferred path is via the ZigBee (trademark) network to node 13 and via the powerline network to the central controller 50, then network node 4 may not use that route since this would pass the message back to network node 16. In which case, network node 4 would choose the next preferable route indicated in its routing table. However, in this example, network node 4 determines from its routing table that the preferred route to the central controller 50 is via network node 2, then network node 1 and onto the central controller 50 (this takes 3 hops). Network node 4 determines from its routing table that the fastest link with network node 2 is over the ZigBee (trademark) network (this is the only direct link). Accordingly, the message together with the destination address is addressed to network node 2 via the ZigBee (trademark) network at 0x02:0x0001.

The message arrives at network node 2 which decodes the message and sends an acknowledgement back to network node 4 to confirm that the message has been safely received. In the event that no acknowledgement is received from network node 2 then network node 4 will instead transmit the message via the next preferential route, which in this case is via network node 5 on the ZigBee (trademark) network (the route with the next least number of hops). Network node 2 determines from the destination address that this message is not intended for it, but rather is intended for the central controller 50. Accordingly, network node 2 determines from its routing table the preferred path the central controller 50. In this example, network node 2 determines from its routing table that the preferred route to the central controller 50 is via network node 1 and onto the central controller 50 (this takes 2 hops). Network node 2 determines from its routing table that the fastest link with network node 2 is currently over the ZigBee (trademark) network. Accordingly, the message together with the destination address is addressed to network node 1 via the ZigBee (trademark) network at 0x02:0x0000.

### INITIATE MESSAGE - ADDRESSING FROM NETWORK NODE 1 TO CENTRAL CONTROLLER

The message is then received by network node 1 which decodes the message and sends an acknowledgement back to network node 2 to confirm that the message has been safely received. In the event that no acknowledgement is received from network node 1 then network node 2 will instead transmit the message via the next preferential route, which in this case is via network node 3 (the route with the next least number of hops). Network node 1 determines from the destination address that this message is not intended for it, but rather is intended for the central controller 50. Accordingly, network node 1 readdresses the message to the central controller 50 at 0x01:0x0000, which is its parent node, and transmits it over the powerline network which is determined from its routing table to be the fastest route (this is the only direct route in this example).

### CENTRAL CONTROLLER - MESSAGE RESPONSE

The central controller 50 then receives the message, decodes it, determines that it is the intended recipient of the message and sends an acknowledgement back to network node 1 to confirm that the message has been safely received. Accordingly, it can be seen that a message originating in network node 16 can be transmitted via three separate networks back to the central controller 50. This ability to bridge different networks enables reliable communications to occur when all the network nodes cannot be connected to the same network and provides for robustness should portions of the network fail or should individual communications links cease to be established. Also, it can be seen that the routing tables are used initially to determine the shortest hop route between network nodes and the central controller as the preferential route. Once the next hop has been determined for the preferential route, the routing table also indicates the fastest available link for the next hop transmission of the message. If a message fails to be received, then a slower link may instead be used. If none of the available links for the next hop transmission enable the message to be delivered then longer hop routes are instead considered.

### MESSAGE RESPONSE - INITIAL ADDRESSING FROM CENTRAL CONTROLLER 50 TO NETWORK NODE 13

Upon receipt of the message at the central controller 50, the messaging table is referred to to determine whether any consequential action is required. In some examples, the messaging table may indicate that a broadcast message is to be sent to more than one network node but, in this example, the central controller 50 determines from the messaging table that a particular message needs to be transmitted to network node 15. Accordingly, the central controller 50 generates a message whose destination address is network node 15 which has an address of 0x02:0x0011.

The routing table indicates that there are two shortest hop routes to network node 15. One is via network nodes 1, 3, 9, 10, 11 and 13, and onto network node 15 (7 hops), another is via network nodes 1, 2, 4, 8, 16 and 13, and onto network node 15 (also 7 hops). Accordingly, the central controller 50 determines to send the message to the first hop network node of the two available routes with the fastest link. In this example, network node 1 is the first hop network node for both of the two available routes and there is only one possible link. Accordingly, the central controller 50 transmits this message over the powerline network to network node 1 at 0x01:0x0101.

Network node 1 receives the message and sends an acknowledgement back to the central controller 50. Network node 1 determines from its forward routing table that there are two shortest hop routes to network node 15. One is via network nodes 3, 9, 10, 11 and 13, and onto network node 15 (6 hops), another is via network nodes 2, 4, 8, 16 and 13, and onto network node 15 (also 6 hops). Accordingly, network node 1 determines to send the message to the first hop network node of the two available routes with the fastest link. In this example, the ZigBee (trademark) link with network node 3 is determined at this moment in time to have the fastest link. Accordingly, network node 1 transmits this message over the ZigBee (trademark) network to network node 3 at 0x02:0x0002.

Network node 3 receives the message and sends an acknowledgement back to network node 1. Network node 3 determines from its forward routing table that there is one shortest hop routes to network node 15, this is via network nodes 9, 10, 11 and 13, and onto network node 15 (5 hops), Accordingly, network node 3 transmits this message over the powerline network to network node 9 at 0x01:0x0301. This process continues until the message is received at network node 13. In each of these subsequent hops, there is only one shortest hop path and one possible link.

### MESSAGE RESPONSE - ADDRESSING FROM NETWORK NODE 13 TO NETWORK NODE 15

Network node 13 determines from the destination address that the message is not intended for that network node. Network node 13 determines from its routing table that it can communicate with network node 15 on the ZigBee (trademark) network either directly or via network node 14. The routing table indicates that there are less number of hops to network node 15 directly than via network node 14 and so the message is transmitted directly to network node 15 over the ZigBee (trademark) network at 0x02:0x0011.

On receipt of the message, network node 15 sends an acknowledgement back to network node 13 to confirm that the message has been safely received. In the event that no acknowledgement is received from network node 15 then network node 13 will instead transmit the message via the next preferential route, which in this case is via network node 14. Network node 15 determines from the destination address that the message is intended for that node. Accordingly, the network node decodes the message and performs the required action.

Hence, it can be seen that messages generated by nodes on one network may be transmitted via other networks back to the central controller 50 using a route which is dependent upon the current status of the network. This routing of messages can be changed dynamically, dependent on the changing configuration of networks and the status of individual links between network nodes. Likewise, messages from the central controller 50 may be transmitted to the intended recipients using various networks dependent upon which links between network nodes provide for the shortest and fastest routing. This approach provides for a robust communications system which is able to adapt to changing circumstances. In particular, when the whole or one part of a network fails, other networks may be utilised instead to carry messages to the intended recipients.

Although illustrative embodiments of the invention have been disclosed in detail herein, with reference to the accompanying drawings, it is understood that the invention is not limited to the precise embodiment shown and that various changes and modifications can be effected therein by one skilled in the art without departing from the scope of the invention as defined by the appended claims and their equivalents.

## Claims

1. An intra-building communications network, comprising:
a plurality of network nodes, each network node being operable to establish a plurality of communications links with at least another network node, each communications link utilising a corresponding one of a plurality of different communications media; and
a central controller operable to allocate each network node to a plurality of different networks, each network having a set of network nodes having communications links with other network nodes in said set which utilise the same communications media.

2. The intra-building communications network of claim 1, wherein said central controller is operable to allocate each different network a unique network identifier and one network node within each set is operable as a controller to allocate each network node a unique node identifier within that network.

3. The intra-building communications network of claim 2, wherein each network node has a plurality of unique node identifiers, one for each of said plurality of different networks.

4. The intra-building communications network of claim 2 or 3, wherein each network node is operable to communicate its unique node identifiers to said central controller and said central controller is operable to store said unique node identifiers for those networks in a central addressing table.

5. The intra-building communications network of any one of claims 2 to 4, wherein each network node is operable, upon detection of a plurality of different networks utilising the same communications media, to connect to one of said plurality of different networks and to communicate details of other of said plurality of different networks to said central controller.

6. The intra-building communications network of claim 5, wherein said central controller is operable upon receipt of said details to instruct said network nodes operable as said controller for said other of said plurality of different networks to cease as said controllers.

7. The intra-building communications network of any preceding claim, wherein each network node is operable to store unique identifiers of other network nodes on any network having a one-hop connection in a node-addressing table.

8. The intra-building communications network of claim 7, wherein each network node is operable to communicate said unique identifiers of other network nodes on any network having a one hop connection to other network nodes and/or said central controller, each of which generate a routing table indicative of communications links between network nodes.

9. The intra-building communications network of any preceding claim, wherein each network node is operable to determine a propagation delay for each communications link with other network nodes having a one-hop connection.

10. The intra-building communications network of any preceding claim, herein each network node is operable upon initiation of an originating message to communicate that originating message to said central controller for routing to at least one destination network node.

11. The intra-building communications network of claim 10, wherein said central controller is operable on receipt of said originating message to determine from a messaging table at least one resultant message to be transmitted to said at least one destination network node.

12. The intra-building communications network of claim 11, wherein said central controller is operable to determine from said central addressing table and said central routing table a routing path having a least number of hops from said central controller to said at least one destination network node and to transmit said resultant message to a network node indicated by said routing path as being a first hop along said routing path.

13. The intra-building communications network of claim 12, wherein each network node is operable to determine from said node routing table a re-evaluated routing path from said network node to said destination network node having a least propagation delay and to transmit said resultant message to a network node indicated by said re-evaluated routing path as being a next hop along said re-evaluated routing path.

14. The intra-building communications network of claim 12 or 13, wherein each network node is operable, in the event that said resultant message fails to be transmitted to said network node indicated as being said next hop, to update its routing table to indicate a loss of that communications link, to determine from said updated routing table an updated re-evaluated path from said network node to said destination network node having a least propagation delay and to transmit said resultant message to a network node indicated by said updated re-evaluated path as being a next hop.

15. A central controller of an intra-building communications network, comprising:
allocation logic operable to allocate each of a plurality of network nodes to a plurality of different networks, each network node being operable to establish a plurality of communications links with at least another network node, each communications link utilising a corresponding one of a plurality of different communications media, each network having a set of network nodes having communications links with other network nodes in said set which utilise the same communications media.

16. A network node of an intra-building communications network, comprising:
communications logic operable to establish a plurality of communications links with at least another network node, each communications link utilising a corresponding one of a plurality of different communications media.

17. A method of intra-building communication, comprising the steps of:
providing a plurality of network nodes, each network node being operable to establish a plurality of communications links with at least another network node, each communications link utilising a corresponding one of a plurality of different communications media; and
allocating each network node to a plurality of different networks, each network having a set of network nodes having communications links with other network nodes in said set which utilise the same communications media.
